# EUROPEAN PATENT APPLICATION

(11) **EP 4 656 898 A1**
(43) Date of publication of application: **03.12.2025**
(21) Application number: 24178664.9
(22) Date of filing: 29.05.2024
(51) Int. Cl.: F16D 65/00, B01D 46/00, B01D 46/42

(54) **BRAKE DUST PARTICLE FILTER DEVICE, CONTROL SYSTEM FOR THE DEVICE AND METHOD FOR PROVIDING A BRAKE DUST PARTICLE DEVICE**

(71) Applicant: MANN+HUMMEL Ventures Pte. Ltd., Singapore 139234 (SG)
(72) Inventor: KOHN, Kevin, 71636 Ludwigsburg (DE); PFANNKUCH, Steffen, 71636 Ludwigsburg (DE)
(74) Representative: Mann + Hummel Intellectual Property

(57) **Abstract**

In one aspect the present invention relates to a brake dust particle filter device (10A, 10B) for a vehicle, the device comprising a filter element (30) for filtering brake dust particles generated by one or more braking devices; a machine-readable chip (14) configured to store an authentication parameter (440) indicative of an identity of the filter element, and a filter-related data (412) of the filter element, the machine-readable chip comprising a code interface (16), the code interface accessible by a code scanner to retrieve at least one of the authentication parameter and/or the filter-related data of the filter element, wherein the machine-readable chip is configured with a tamper-proof function for authentication of the authentication parameter.

In further aspects the invention relates to a control system (400A, 400B) for the brake dust particle filter device, and a method (600) for providing a brake dust particle filter device for a vehicle.

## Description

### Technical Field

Various aspects of this disclosure relate to a brake dust particle filter device for a vehicle, a control system comprising the brake dust particle filter device for a vehicle, and a method for providing the brake dust particle filter device, for the vehicle.

### Background Art

The following discussion of the background art is intended to facilitate an understanding of the present disclosure only. It should be appreciated that the discussion is not an acknowledgement or admission that any of the material referred to was published, known or is part of the common general knowledge of the person skilled in the art in any jurisdiction as of the priority date of the disclosures.

Fine dust, which includes brake dust particles, poses a danger to human health and pollutes the environment. Brake dust particle filter devices are traditionally employed to filter brake dust particles generated by one or more braking devices of a vehicle. Due to the harmful nature of brake dust particles, the filtering efficiency of such brake dust particle filter devices installed for use in vehicles may soon be regulated by legislation. It is thus important that such brake dust particle filter devices comply with the required legal rules and regulations.

Prior to releasing the brake dust particle filter devices into market, a manufacturer first evaluates the filter efficiency of the devices in a testing facility, to ensure that said devices comply with the required legal rules and regulations. Further, such brake dust particle filter devices have a finite lifespan and may have to be repaired and/or replaced at certain intervals.

Currently, a user is not able to determine if the brake dust particle filter devices for use or installed in a vehicle, are original devices produced by a specific manufacturer, that has been tested to comply with the legal rules and regulations. In addition, a user may not be aware of the filter efficiency and/or remaining usable life of the brake dust particle filter device, and may not repair and/or replace the device in time to ensure compliance with the legal rules and regulations.

Accordingly, there exists a need for an improved device that seeks to address at least one of the aforementioned issues.

### Summary

The disclosure was conceptualised to provide an improved brake dust particle filter device, which provides a user, information on said device. To this end, the improved brake dust particle filter device comprises a machine-readable chip configured to store, at least, an authentication parameter indicative of an identity of the filter element, wherein the machine-readable chip is configured with a tamper-proof function for authentication of said authentication parameter. The improved device allows a user to ascertain if the device for use in the vehicle is an original device produced by a specific manufacturer, and which has been tested to comply with the legal rules and regulations associated with such devices. This prevents the use of ineffective and untested brake dust particle filter devices, that fail to comply with the legal rules and regulations. Further, the improved device allows the manufacturer to track and monitor said device, for example, for monitoring when the device needs to be repaired and/or replaced. The improved device also allows the user to monitor a filtration efficiency, and provides information on the lifetime of the device. Accordingly, the improved device ensures that the legal rules and regulations associated with brake dust particle filter devices are complied with.

According to a first aspect of the disclosure, there is provided a brake dust particle filter device for a vehicle, the device comprising a filter element for filtering brake dust particles generated by one or more braking devices; a machine-readable chip configured to store an authentication parameter indicative of an identity of the filter element, and a filter-related data of the filter element, the machine-readable chip comprising a code interface, the code interface accessible by a code scanner to retrieve at least one of the authentication parameter and/or the filter-related data of the filter element, wherein the machine-readable chip, is configured with a tamper-proof function for authentication of the authentication parameter.

In various embodiments, the filter element is a cleanable filter element and the filter element further comprises a stripper device for cleaning the cleanable filter element, wherein the filter-related data comprises a cleaning parameter of the stripper device, the cleaning parameter indicative of a cleaning state of the stripper device, and wherein the machine-readable chip is configured to obtain the cleaning parameter from the stripper device.

In various embodiments, the machine-readable chip is configured to communicate with the code scanner based on a radio frequency (RF) communication protocol, or wherein the machine-readable chip is configured to generate a quick response (QR) code or a bar code.

According to a second aspect of the disclosure, there is provided a brake dust particle filter control system for a vehicle, the control system comprising the brake dust particle filter device of the first aspect of the disclosure, wherein the control system further comprises, the code scanner in data communication with a processor, the code scanner configured to access the code interface to retrieve at least one of the authentication parameter and/or the filter-related data of the filter element.

In various embodiments, the filter-related data of the filter element comprises a construct parameter indicative of a model status of the filter element, the model status of the filter element comprising at least one of a filter media parameter indicative of a type of filter media of the filter element; and/or a service lifetime parameter indicative of a remaining usable life of the type of the filter media of the filter element.

In various embodiments, the type of the filter media comprises a pleated filter media, and wherein the model status of the filter element comprises, a pleat filter media parameter indicative of a pleat number data and/or a pleat height data, of the pleated filter media.

In various embodiments, the filter-related data of the filter element comprises a cleaning parameter indicative of a cleaning state of the stripper device, the cleaning parameter comprising, a stripper device counting parameter indicative of a number of times the stripper device has been used for cleaning the filter element; and a predetermined stripper device usable lifetime threshold value indicative of a usable lifetime of the stripper device; wherein the processor is configured to determine, a stripper device remaining lifetime parameter indicative of a remaining usable life of the stripper device, based on the stripper device counting parameter and the predetermined stripper device usable lifetime threshold value.

In various embodiments, the control system further comprises a filter control unit operable to control an operation of the stripper device of the brake dust particle filter device, the filter control unit in data communication with the processor, wherein the cleaning control unit comprises one or more counters configured to measure the number of times the stripper device has been used to clean the filter element; and determine the stripper device counting parameter.

In various embodiments, the authentication parameter indicative of the identity of the filter element comprises one or more identification values; wherein the control system further comprises, a storage device configured to store a plurality of stored identification parameters, each stored identification parameter indicative of a stored identity of a respective one of a plurality of references of the filter element, wherein each of the stored identification parameter comprises one or more stored identification values; wherein the processor is further configured to compare, the one or more identification values of the authentication parameter, with a corresponding one of the one or more stored identification values, of each stored identification parameter; determine, if the one or more identification values of the authentication parameter, matches the corresponding one or more stored identification values, of at least one stored identification parameter of the plurality of stored identification parameters; determine, an authentication result indicative of an authenticity of the filter element, based on the determination whether the one or more identification values of the authentication parameter, matches the corresponding one of the one or more stored identification values, of at least one stored identification parameter of the plurality of stored identification.

In various embodiments, the processor is further configured to trigger, a first notification indicative of a first notice to a user, the first notice indicative of the authenticity of the filter element, based on the authentication result.

In various embodiments, the filter-related data of the filter element comprises an efficiency parameter indicative of a filter efficiency of the brake dust particles by the filter element, wherein the processor is further configured to, obtain, an unfiltered concentration parameter indicative of an unfiltered concentration of the brake dust particles in an unfiltered fluid flow entering the filter element, and a filtered concentration parameter indicative of a filtered concentration of the brake dust particles in a filtered fluid flow exiting the filter element; determine, the efficiency parameter based on the unfiltered concentration parameter and the filtered concentration parameter.

In various embodiments, the processor is further configured to compare, the efficiency parameter, with a predetermined first efficiency threshold value indicative of a first allowable filter efficiency of the brake dust particles; determine, if the efficiency parameter, is less than or equal to the predetermined first efficiency threshold value; trigger, a second notification indicative of a second notice to the user, the second notice indicative of whether the efficiency parameter, is less than or equal to the predetermined first efficiency threshold value.

In various embodiments, the filter-related data of the filter element comprises a flow velocity parameter indicative of a flow velocity difference between the unfiltered fluid flow entering the filter element, and the filtered fluid flow exiting the filter element, wherein the processor is further configured to obtain, an unfiltered flow velocity parameter indicative of a flow velocity of the unfiltered fluid flow entering the filter element, and a filtered flow velocity parameter indicative of a flow velocity of the filtered fluid flow exiting the filter element; and determine, the flow velocity parameter based on the unfiltered pressure parameter and the filtered pressure parameter.

In various embodiments, the filter-related data of the filter element comprises a differential pressure parameter indicative of a pressure difference between the unfiltered fluid flow entering the filter element, and the filtered fluid flow exiting the filter element, wherein the processor is further configured to obtain, an unfiltered pressure parameter indicative of a pressure of the unfiltered fluid flow entering the filter element, and a filtered pressure parameter indicative of a pressure of the filtered fluid flow exiting the filter element; and determine, the differential pressure parameter based on the unfiltered pressure parameter and the filtered pressure parameter.

In various embodiments, the system further comprises a vehicle operation device for controlling one or more vehicle operating parameters, each vehicle operating parameter indicative of an operating status of the vehicle.

In various embodiments, the processor is further configured to compare, the service lifetime parameter, with a predetermined filter element usable lifetime threshold value indicative of a usable life of the type of filter media of the filter element; determine, if the service lifetime parameter, is less than or equal to the predetermined filter element usable lifetime threshold value; and adjust, at least one of the one or more vehicle operating parameters, based on the determination whether the service lifetime parameter, is less than or equal to the predetermined filter element usable lifetime threshold value.

In various embodiments, the processor is further configured to compare, the stripper device remaining lifetime parameter, with the predetermined stripper device usable lifetime threshold value; determine, if the stripper device remaining lifetime parameter, is less than or equal to the predetermined stripper device usable lifetime threshold value; and adjust, at least one of the one or more vehicle operating parameters, based on the determination whether the stripper device remaining lifetime parameter, is less than or equal to the predetermined stripper device usable lifetime threshold value.

In various embodiments, the processor is further configured to adjust, at least one of the one or more vehicle operating parameters, based on the authentication result indicative of the authenticity of the filter element.

In various embodiments, the processor is further configured to compare, the efficiency parameter, with a predetermined second efficiency threshold value indicative of a second allowable filter efficiency of the brake dust particles, wherein the predetermined second efficiency threshold value is less than the predetermined first efficiency threshold value; determine, if the efficiency parameter, is less than or equal to the predetermined second efficiency threshold value; and adjust, at least one of the one or more vehicle operating parameters, based on the determination whether the efficiency parameter, is less than or equal to the predetermined second efficiency threshold value.

In various embodiments, the processor is further configured to, compare, the flow velocity parameter, with a predetermined flow velocity threshold value indicative of an allowable flow velocity related to the filter element; determine, if the flow velocity parameter, is greater than or equal to the predetermined flow velocity threshold value; and adjust, at least one of the one or more vehicle operating parameters, based on the determination whether the flow velocity parameter, is greater than or equal to the predetermined flow velocity threshold value.

In various embodiments, the processor is further configured to, compare, the differential pressure parameter, with a predetermined differential pressure threshold value indicative of an allowable differential pressure related the filter element; determine, if the differential pressure parameter, is greater than or equal to the predetermined differential pressure threshold value; and adjust, at least one of the one or more vehicle operating parameters, based on the determination whether the differential pressure parameter, is greater than or equal to the predetermined differential pressure threshold value.

According to a third aspect of the disclosure, there is provided a method for providing the brake dust particle filter device of the first aspect of the disclosure, for a vehicle, the method comprising, providing, a filter element for filtering brake dust particles generated by one or more braking devices; and providing, a machine-readable chip configured to store an authentication parameter indicative of an identity of the filter element, and a filter-related data of the filter element; the machine-readable chip configured with a tamper-proof function for authentication of the authentication parameter indicative of the identity of the filter element, and wherein the machine-readable chip comprises a code interface.

In various embodiments, the filter element is a cleanable filter element, and the filter element further comprises a stripper device for cleaning the cleanable filter element; wherein the filter-related data comprises a cleaning parameter of a stripper device, the cleaning parameter indicative of a cleaning state of the stripper device, and wherein the machine-readable chip is configured to obtain the cleaning parameter from the stripper device.

In various embodiments, the machine-readable chip is configured to communicate with a code scanner based on a RF communication protocol, or wherein the machine-readable chip is configured to generate a QR code or a bar code.

### Brief Description of Drawings

The disclosure will be better understood with reference to the detailed description when considered in conjunction with the non-limiting examples and the accompanying drawings, in which:
- FIG. 1 shows a perspective view of an exemplary schematic illustration of a brake dust particle filter device 10A;
- FIG. 2 shows a perspective view of another exemplary schematic illustration of a brake dust particle filter device 10B, wherein the filter element 30 is a cleanable filter element 30;
- FIG. 3 shows a cross-sectional view of the same brake dust particle filter device 10B;
- FIG. 4 shows a top view of the same brake dust particle filter device 10B;
- FIG. 5 shows an exemplary schematic illustration of a brake dust particle filter control system 400A including a brake dust particle filter device, for a vehicle;
- FIG. 6 shows another exemplary schematic illustration of a brake dust particle filter control system 400B including a brake dust particle filter device, for a vehicle;
- FIG. 7 shows an exemplary schematic illustration showing the comparison, between the identification values 502 of the authentication parameter 440 of the filter element 30, and the stored identification values 512 of a plurality of stored identification parameters 442; and
- FIG. 8 shows an exemplary flowchart of a method 600 for providing a brake dust particle filter device for a vehicle.

### Detailed Description

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements. As used herein, the term "and/or" includes any and all combinations of one or more of the associated listed items.

While such terms as "first," "second," etc., may be used to describe various elements, such elements must not be limited to the above terms. The above terms are used only to distinguish one element from another, and do not define corresponding elements, for example, an order and/or significance of the elements. Without departing from the scope of rights of the specification, a first element may be referred to as a second element, and similarly, the second element may be referred to as the first element.

Throughout the description, the term "brake dust particle filter device", as used herein, may refer to devices comprising filter elements particularly suitable for retaining particle emissions generated by one or more braking devices of the vehicle. The brake dust particle filter device may be adapted to different brake sizes, and to fit in particular installation spaces of the vehicle. In various embodiments, the filter element of the device may be cleanable. Alternatively, the filter element of the device may not be cleanable.

Throughout the description, the term "machine-readable chip", as used herein, may refer to a circuit, including analog circuits or components, digital circuits or components, hybrid circuits or components. Any other kind of implementation of the respective functions which will be described in more detail below may also be understood as a "circuit". A digital circuit may be understood as any kind of a logic implementing entity, which may be special purpose circuitry or a processor executing software stored in a memory, firmware, or any combination thereof. In various embodiments, the machine-readable chip may include a semiconductor chip. The machine-readable chip may comprise at least one integrated circuit, and/or an antenna for the transmission of communication signals. In some embodiments, the machine-readable chip may be configured to operate with wireless communication protocols. Non-limiting examples of the wireless communication protocols include: global system for mobile communication (GSM), enhanced data GSM environment (EDGE), wideband code division multiple access (WCDMA), code division multiple access (CDMA), time division multiple access (TDMA), wireless fidelity (Wi-Fi), voice over Internet protocol (VoIP), worldwide interoperability for microwave access (Wi-MAX), Wi-Fi direct (WFD), an ultra-wideband (UWB), infrared data association (IrDA), Bluetooth, ZigBee, SigFox, LPWan, LoRaWan, GPRS, 3G, 4G, LTE, and 5G communication systems. In some embodiments, the machine-readable chip may be configured to operate with radio frequency (RF) communication protocols, and/or near-field communication protocols, such as per, in non-limiting examples: ISO/IEC 14443, ISO/IEC 18092. The machine-readable chip may encode information related to the brake dust particle filter device, for example, an identity of the device. In this regard, the term "code interface", as used herein, may refer to a machine-readable zone, which displays a code accessible by a specialized scanner, e.g. code scanner, to facilitate access and retrieval of the encoded information. In some embodiments, the machine-readable chip may be configured to communicate with the specialized scanner, e.g. code scanner, via any of the aforementioned wireless communication system protocols, such as a RF communication protocol. It is contemplated that the machine-readable chip may be configured to operate with wired communication protocols, and may communicate with the code scanner via the wired communication protocols.

Throughout the description, the term "vehicle", as used herein, refers to a motor-powered vehicle, for example having 2, 3, 4, or more wheels. Examples of the vehicle include a passenger car, a truck, a bus, a lorry, or a rail vehicle, for example, a locomotive, a wagon. In some embodiments, the vehicle may be an electric vehicle or a hybrid (internal combustion engine and electrical) vehicle. In some embodiments, the vehicle may be an internal combustion engine (ICE) vehicle (i.e., non-hybrid). An example of an electric vehicle is a battery electric vehicle (BEV). Vehicle may further include autonomous vehicles. It is contemplated that the vehicle may include vehicles configured for use on water and/or air.

Throughout the description, the term "fluid flow", as used herein, may refer to a flow of a gas. In various embodiments, the gas may be air, and the fluid flow may comprise unfiltered air, or filtered air.

Throughout the description, the term "processor", refers to a circuit, including analog circuits or components, digital circuits or components, hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, firmware, or any combination thereof. In various embodiments, the processor may also include a single stand-alone computer, a single dedicated server, multiple dedicated servers, and/or a virtual server running on a larger network of servers and/or cloud-based services. In some embodiments, the processor may further include an electronic control unit of the vehicle and/or a mobile device.

Throughout the description, the term "obtain", as used herein, may refer to the processor which actively obtains, or passively receives information, e.g. data or parameters, from a code scanner and/or a storage device, e.g. memory and/or sensors of the brake dust particle filter device or the vehicle. In various embodiments, the parameters may be obtained directly or indirectly, from the data and/or sensors of the brake dust particle filter device or the vehicle. The processor may also obtain various data types from a communication interface, e.g. a user interface. The code scanner and the communication interface may be located on the processor of the control system. The processor may also receive or obtain the various data types via a register or an analog-to-digital port.

Throughout the description, the term "store", as used herein, may refer to information that is temporally stored, or permanently stored in the machine-readable chip or the processor. The stored information, e.g. parameters and/or data, may be updated periodically, e.g. at regular scheduled intervals, or may be updated upon request by the machine-readable chip or the processor. For example, additional information may be added, and/or the stored information may be updated, e.g. over-written from another chip, processor, server and/or cloud-based service.

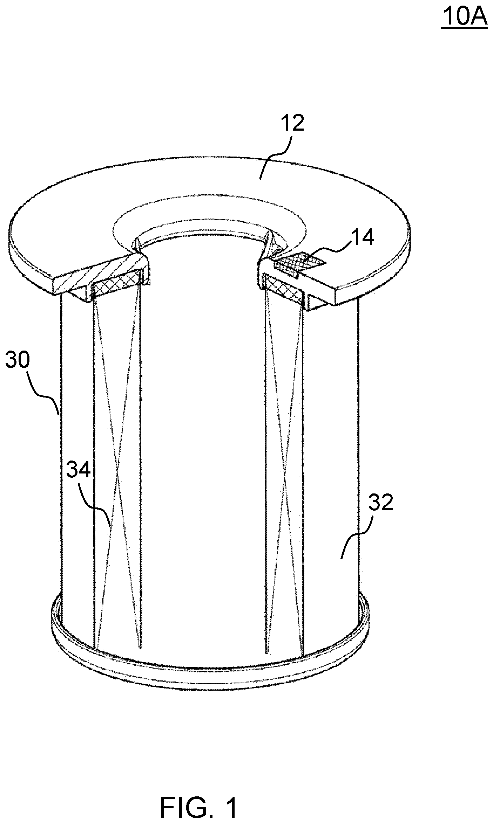

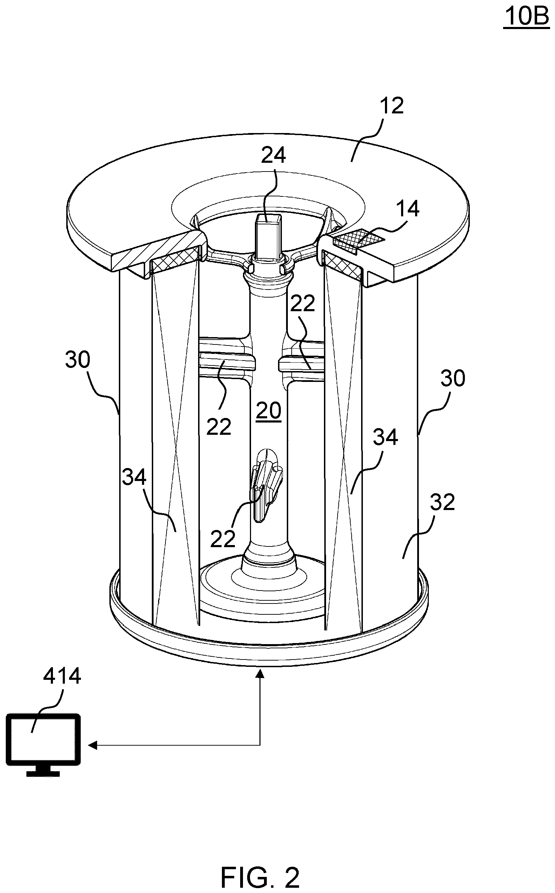

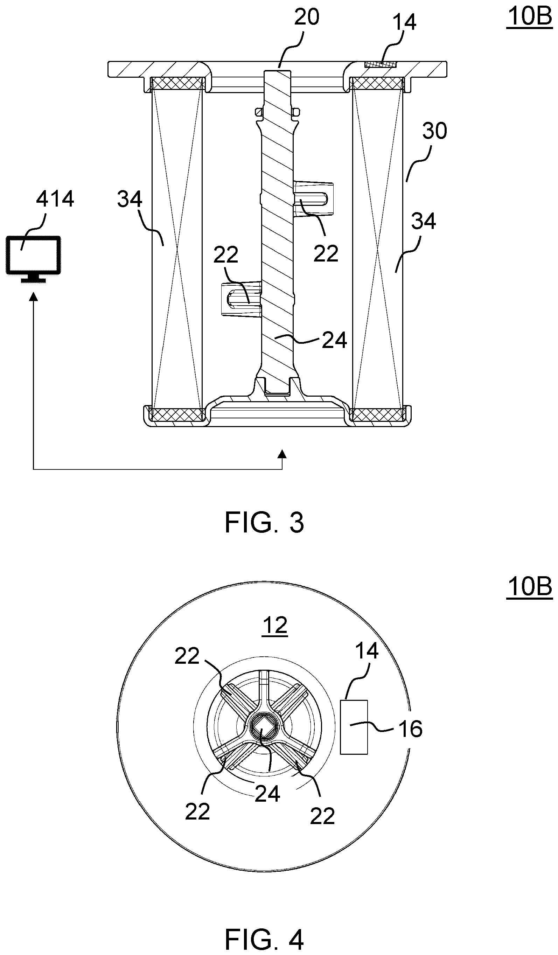

FIG. 1 shows a perspective view of an exemplary schematic illustration of a brake dust particle filter device 10A, in accordance with an aspect of the disclosure. FIG. 2 shows a perspective view of another exemplary schematic illustration of a brake dust particle filter device 10B, wherein the filter element 30 is a cleanable filter element 30. FIGS. 3 and 4 show a cross-sectional view, and a top view, respectively, of the same brake dust particle filter device 10B. The brake dust particle filter device 10A and 10B may be particularly suitable for installation and use in a vehicle.

Referring to FIGS. 1 to 4, the brake dust particle filter device 10A, 10B comprises a filter element 30 for filtering brake dust particles generated by one or more braking devices of the vehicle. The filter element 30 may be contained in a filter cartridge 32 which may be inserted into a part of the housing 12 of the brake dust particle filter device 10A, 10B. The filter element 30 may include filter media 34 configured to retain the brake dust particles, and in various embodiments, the filter media 34 may include non-woven metal fibers. The filter media 34 may be pleated or folded, and may include a plurality of pleats or folds. An operating state of the brake dust particle filter device 10A, 10B may be controlled by a filter control unit 414. The filter control unit 414 may also be in data communication with an electronic control unit the vehicle to control the operating state of the brake dust particle filter device 10A, 10B. It is contemplated that the operating state of the brake dust particle filter device 10A, 10B may be controlled by the electronic control unit of the vehicle.

As shown in FIGS. 2 and 3, the filter element 30 may be a cleanable filter element 30, and the filter element 30 may further include a stripper device 20 configured to clean the filter media 34 of accumulated brake dust particles trapped therein. The stripper device 20 may include one or more stripper elements 22 arranged along a length of a stripper shaft 24, and arranged to extend perpendicular to or at a non-zero angle (e.g. a non-zero acute angle) with respect to the stripper shaft 24. To clean the filter element 30, the stripper shaft 24 may be configured to rotate about its longitudinal axis, such that the stripper elements 22 engage with the filter media 34, for example, the one or more pleats of the pleated filter media 34, to cast off accumulated brake dust particles trapped in the filter media 34. Accordingly, the filter element 30 may be cleaned.

The filter control unit 414 may be further operable to control an operation of the stripper device 20 of such cleanable filter element 30. In various embodiments, the filter control unit 414 may include one or more counters configured to measure a number of times the stripper device 20 has been used to clean the filter element 30. The filter control unit 414 may measure a number of complete and/or partial rotations of the stripper elements 22 about the stripper shaft 24. In some embodiments, the filter control unit 414 may measure a number of times the stripper elements 22 engage with the one or more pleats of the pleated filter media 34. Accordingly, the filter control unit 414 may determine a stripper device counting parameter 432, based on the number of times the stripper device 20 has been used to clean the filter element 30. Alternatively, one or more sensors may be arranged on a part of the filter element 30, on a part of the brake dust particle filter device 10A, 10B, or on a part of the vehicle, to measure a number of times the stripper device 20 has been used to clean the filter element 30.

The brake dust particle filter device 10A, 10B further comprises a machine-readable chip 14 arranged on a part of the device 10. In various embodiments, the machine-readable chip 14 may be arranged on an outer surface of the housing 12 of the device 10A, 10B, and may be accessible to a code scanner 402. It is contemplated that the brake dust particle filter device 10A, 10B may be arranged on an inner surface of the device 10A, 10B, at a location accessible to a code scanner 402.

The machine-readable chip 14 is configured to store data related to the brake dust particle filter device 10A, 10B, and includes a code interface 16 configured to display a code comprising the stored data. The stored data may include an authentication parameter 440 indicative of an identity of the filter element 30, and/or filter-related data 412 of the filter element 30. In various embodiments, the filter control unit 414 may write filter-related data 412 including the stripper device counting parameter 432 to the machine-readable chip 14. The code interface 16 is accessible by a code scanner 402, for access to and retrieval of the data. In various embodiments, the code scanner 402 may scan and read the code displayed on the code interface 16 to retrieve the stored data.

In various embodiments, the machine-readable chip 14 may be configured to communicate with the code scanner 402 based on wireless communication protocols, such as RF communication protocols and/or near-field communication protocols. The code scanner 402 may therefore be configured to retrieve at least one of the authentication parameter 440 and/or the filter-related data 412 of the filter element via wireless signals, e.g. RF signals. In some embodiments, the machine-readable chip 14 may comprise one or more machine-readable chips 14, for example, one or more radio-frequency identification (RFID) chips which may communicate with the code scanner 402 via RF signals. In some embodiments, the machine-readable chip 14 may comprise one or more RFID chips, and/or one or more near-field communication (NFC) chips which may communicate with the code scanner 402 via near-field signals.

In various embodiments, the machine-readable chip 14 may be configured to generate a code, for example, a quick response (QR) code and/or a barcode, the code being accessible and readable via the code scanner 402. The machine-readable chip 14 may be a tamper-resistant chip and configured with a tamper-proof function, for access to, retrieval of, and authentication of the data related to the brake dust particle filter device 10A, 10B.

Within the context of the disclosure, the term "tamper-proof function", as used herein, may refer broadly to the machine-readable chip 14 being configured such that said machine-readable chip 14 may not be modified, altered, or replicated in an unintended and/or unauthorized manner. The tamper-proof function may be implemented extrinsically, e.g. electrically configured external to the chip 14, and/or intrinsic, e.g. configuration of a tamper-proof function to said chip 14 mechanically or by software codes.

In some embodiments, a part of the tamper-proof function may be extrinsic to the machine-readable chip 14. For example, the determination of the authenticity of the filter element 30, retrieved from the data stored on the machine-readable chip 14, may be performed on the processor 410, e.g. a cloud-based service, the electronic control unit of the vehicle and/or a mobile device (as will be explained below). In some embodiments, the data stored on the machine-readable chip 14 may be further encrypted, and only accessible by embedded software containing appropriate security measures installed on the code scanner 402 and/or the processor 410. In some other embodiments, the data related to the brake dust particle filter device 10A, 10B may be protected by password(s), for example, password(s) stored on the code scanner 402 and/or the processor 410, and/or password(s) known to specific users accessing said data via the code scanner 402 and/or the processor 410. It is contemplated that the processor 410 may be further configured to determine if any part of the device 10A, 10B has been tampered with, e.g. a machine-readable chip 14 associated with a filter element 30 in use shows the use of a new filter element 30.

In some embodiments, the machine-readable chip 14 may be a read-only chip 14, e.g. read-only memory and the data stored on the machine-readable chip 14 may not be electronically modified. In some embodiments, the machine-readable chip 14 may be a read-write chip 14, where additional data may only be electronically written or stored data may be electronically over-written, when the machine-readable chip 14 is in a predetermined range, e.g. predetermined physical distance, to the filter control unit 414 and/or to the code scanner 402. In some embodiments, the device 10A, 10B may be in data communication with a user interface, and a user may write additional data or over-write the stored data. It is contemplated that additional data may only be electronically written or stored data may be electronically over-written, in a predetermined range of one or more other sensing means of the brake dust particle filter device 10A, 10B, or of the vehicle.

In some embodiments, it is contemplated that the machine-readable chip 14 could be mechanically configured with a tamper-proof function to prevent said machine-readable chip 14 from being tampered with. For example, the machine-readable chip 14 may be encapsulated, e.g. pre-stressed, such that the machine-readable chip 14 will damage, e.g. fracture, if interfered with. In other examples, the tamper-proof function may include a tamper-evident tag, e.g. NFC and/or RFID tag, applied to the brake dust particle filter device 10A, 10B, to prevent the machine-readable chip 14 and/or device 10A, 10B from working, e.g. by breaking the antenna's connection located on the tamper-evident tag, with the chip 14 and device 10A, 10B, if the tamper-evident tag is damaged or removed. In some embodiments, the machine-readable chip 14 may be integrated with the tamper-evident tag, and the machine-readable chip 14 and tamper-evident tag may be arranged on the brake dust particle filter device 10A, 10B. In some other embodiments, the machine-readable chip 14 and the tamper-evident tag may be separately arranged on the brake dust particle filter device 10A, 10B.

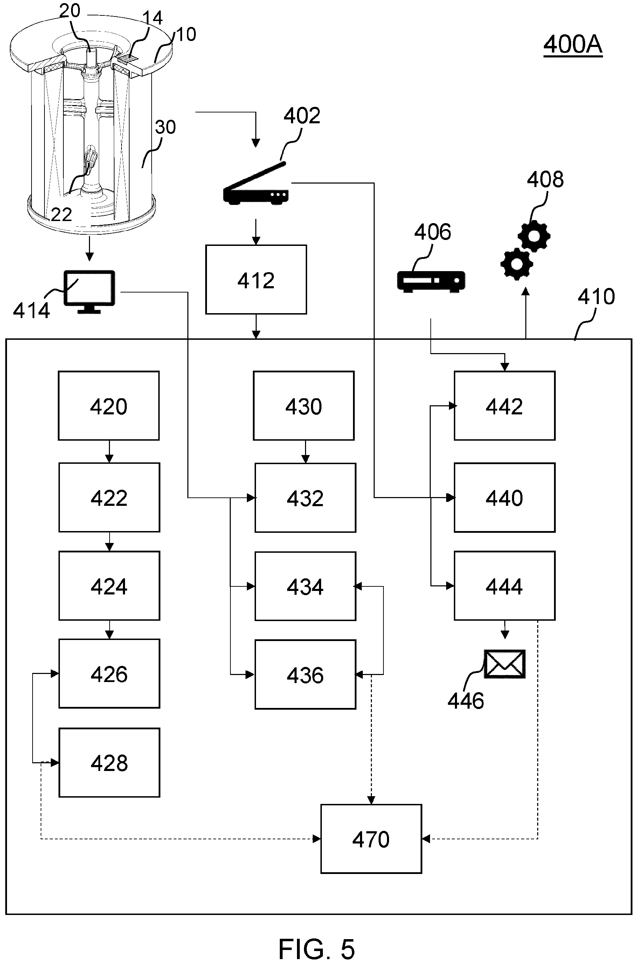

FIG. 5 shows an exemplary schematic illustration of a brake dust particle filter control system 400A including a brake dust particle filter device, for a vehicle. The brake dust particle filter device may be the device 10A, 10B described with reference to FIGS. 1 to 4, and repeated descriptions will be omitted for conciseness.

Control system 400A further includes a code scanner 402 for retrieving the data related to the brake particle filter device 10A, 10B from the code interface 16 of the machine-readable chip 14. Control system 400A also includes a processor 410 in data communication with the code scanner 402 for obtaining and processing the retrieved data. In some embodiments, the processor 410 may comprise the code scanner 402.

Control system 400A may further include a vehicle operation device 408 for controlling one or more vehicle operating parameters 470, each vehicle operating parameter 470 indicative of an operating status of the vehicle. Non-limiting examples of the vehicle operating parameter 470 include an engine operating parameter to control the activation and deactivation of the engine of the vehicle; an acceleration operating parameter to control an acceleration of the accelerometer of the vehicle; a thermostat operating parameter to control a temperature of the heating, ventilation, and air-conditioning device of the vehicle. In various embodiments, the processor 410 may adjust at least one of the one or more vehicle operating parameters 470, to control the operation of the vehicle.

Referring to FIG. 5, the data related to the brake particle filter device 10A, 10B may include filter-related data 412 of the filter element 30, and an authentication parameter 440 indicative of an identity of the filter element 30.

The filter-related data 412 may include an operating status of the filter element 30, for example, data indicative of whether the filter element 30 is in an ON state, i.e. in operation; or in an OFF state, i.e. not in operation. The operating status of the filter element 30 may be controlled by the filter control unit 414.

The filter-related data 412 may further include a construct parameter 420 indicative of a model status of the filter element 30. In various embodiments, the construct parameter 420 may include a filter media parameter 422 indicative of a type of filter media 34 of the filter element 30. For example, the filter media parameter 422 may include data related to a material of the filter media 34, such as but not limited to, a dimension, e.g. length and height, of the filter media 34; a porosity and/or permeability of the type of filter media 34; a mechanical strength; a thermal and corrosion resistance of the type of filter media 34.

In various embodiments, when the type of filter media 34 comprises a pleated filter media 34 comprising a plurality of pleats, the model status of the filter element 30 may include a pleat filter media parameter 424 related to a geometry of the pleated filter media 34. For example, the pleat filter media parameter 424 may be indicative of a pleat number data, a pleat height data, and/or a pleat pitch data.

In various embodiments, the construct parameter 420 may further include a service lifetime parameter 426 indicative of a remaining usable life specific to the type of the filter media 34 of the filter element 30. The service lifetime parameter 426 may be dependent on the usage and/or types of particles, filtered by the filter media 34. In some embodiments, the service lifetime parameter 426 may be dependent on whether the filter element 30 is a cleanable filter element 30 or a non-cleanable filter element. For example, the service lifetime parameter 426 of a cleanable filter element 30 may be greater than that of a non-cleanable filter element 30.

In various embodiments, the construct parameter 420 may further include a predetermined filter element usable lifetime threshold value 428 indicative of a usable life of the type of filter media 34 of the filter element 30. In various embodiments, the predetermined filter element usable lifetime threshold value 428 may refer to a maximum usable lifespan of the type of filter media 34, which may be predetermined by the manufacturer of the filter media 34. In some embodiments, the predetermined filter element usable lifetime threshold value 428 may be a user-defined value set at a value slightly lower than the maximum usable lifespan of the type of filter media 34.

As shown in FIG. 5, the processor 410 may be configured to compare, the service lifetime parameter 426 with the predetermined filter element usable lifetime threshold value 428. The processor 410 may further determine, if the service lifetime parameter 426 is less than or equal to the predetermined filter element usable lifetime threshold value 428. In various embodiments, the processor 410 may trigger a notification, e.g. third notification, to inform a user that the service lifetime parameter 426 is less than or equal to the predetermined filter element usable lifetime threshold value 428, thereby informing the user that the filter element 30 has reached or is reaching its maximum usable lifespan. The notification may be displayed on a user interface, e.g. dashboard of the vehicle, and the processor 410 may transmit the notification to the dashboard of the vehicle. In some embodiments, the processor 410 may also provide data on an estimated time at which the processor 410 may adjust at least one of the one or more vehicle operating parameters 470 of the vehicle. For example, the notification may further include data on a remaining travel distance, and/or hours of operation of the engine of the vehicle, before the one or more vehicle operating parameters 470 of the vehicle may be adjusted. The notification may also include data informing the user on when the filter element 30 needs to be cleaned, repaired and/or replaced. This notification may allow the user time to clean, repair and/or replace the filter element 30, to comply with the legal rules and regulations.

The processor 410 may also adjust, at least one of the one or more vehicle operating parameters 470 based on said determination. In various embodiments, the processor 410 may be configured to decrease a performance of the vehicle, if it is determined that the service lifetime parameter 426 is less than or equal to the predetermined filter element usable lifetime threshold value 428. For example, the processor 410 may adjust, the engine operating parameter to cause the vehicle operation device 408 to deactivate the engine of the vehicle; the acceleration operating parameter to regulate acceleration of the vehicle, e.g. setting a maximum speed limit for the vehicle; and/or the thermostat operating parameter to increase or decrease a set temperature of the vehicle. The adjustments may affect the operating performance of the vehicle and/or affect a user experience when using the vehicle.

Referring to FIGS. 2, 3 and 5, the filter element 30 may be the cleanable, and include the stripper device 20 for cleaning the cleanable filter element 30. The filter-related data 412 of the filter element 30 may therefore further include a cleaning parameter 430 indicative of a cleaning state of the stripper device 20.

In various embodiments, the cleaning parameter 430 may include a stripper device counting parameter 432 indicative of a number of times the stripper device 20 has been used to clean the cleanable filter element 30. The filter control unit 414 may measure the number of times the stripper device 20 has been used to clean the filter media 34 of the filter element 30, e.g. number of complete and/or partial rotations of the stripper device 20, to determine the stripper device counting parameter 432.

In various embodiments, the cleaning parameter 430 may further include a predetermined stripper device usable lifetime threshold value 434 indicative of the usable lifetime of the stripper device 20. In some embodiments, the predetermined stripper device usable lifetime threshold value 434 may be representative of the maximum number of complete and/or partial rotations of the stripper device 20. In some other embodiments, the predetermined stripper device usable lifetime threshold value 434 may be representative of the maximum number of times the stripper elements 22 may engage with the filter media 34, or one or more pleats of the filter media 34, to cast off the accumulated brake dust particles, before a cleaning efficacy of the stripper elements 22 of the stripper device 20 may be compromised.

The processor 410 may be further configured to determine, a stripper device remaining lifetime parameter 436 indicative of a remaining usable life of the stripper device 20, based on the counting parameter 432 and the predetermined stripper device usable lifetime threshold value 434. In various embodiments, the stripper device remaining lifetime parameter 436 may comprise a difference between the predetermined stripper device usable lifetime threshold value 434, and the counting parameter 432.

Referring to FIG. 5, the processor 410 may be configured to compare, the stripper device remaining lifetime parameter 436 with the predetermined stripper device usable lifetime threshold value 434; and determine, if the stripper device remaining lifetime parameter 436 is less than or equal to the predetermined stripper device usable lifetime threshold value 434. In various embodiments, the processor 410 may trigger another notification, e.g. fourth notification, to inform a user that the stripper device remaining lifetime parameter 436 is less than or equal to the predetermined stripper device usable lifetime threshold value 434, thereby informing the user that the stripper device 20 is reaching or has reached its maximum usable lifespan for cleaning the filter element 30.

The processor 410 may also adjust, at least one of the one or more vehicle operating parameters 470 based on said determination. In various embodiments, the processor 410 may be configured to affect the operating performance of the vehicle and/or affect a user experience when using the vehicle, if it is determined that the stripper device remaining lifetime parameter 436 is less than or equal to the predetermined stripper device usable lifetime threshold value 434. Examples of the various types of notifications and adjustments of the operating parameters 470 have been described above, and repeated descriptions will be omitted for conciseness.

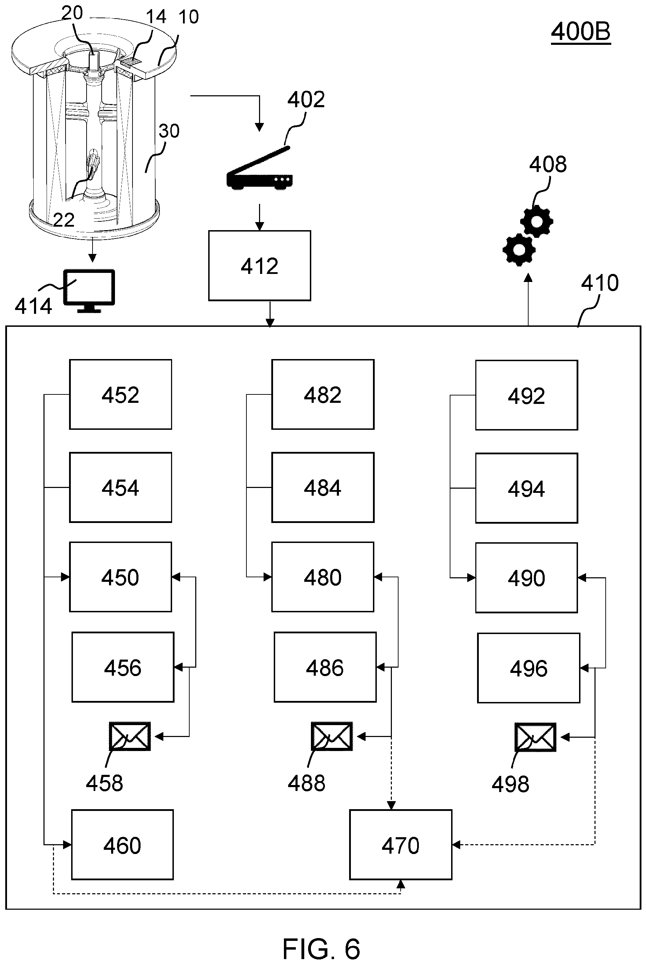

FIG. 6 shows another exemplary schematic illustration of a brake dust particle filter control system 400B including a brake dust particle filter device, for a vehicle. The brake dust particle filter device may be the device 10A, 10B described with reference to FIGS. 1 to 4, and repeated descriptions will be omitted for conciseness. The brake dust particle filter control system 400B may be based on the brake dust particle filter control system 400A described with reference to FIG. 5, and may include additional parameters of the filter-related data 412.

The filter-related data of the filter element 412 may further include an efficiency parameter 450 indicative of a filter efficiency of the brake dust particles by the filter element 30. The processor 410 may be configured to obtain an unfiltered concentration parameter 452 indicative of an unfiltered concentration of the brake dust particles in an unfiltered fluid flow entering the filter element 30, e.g. fluid flow before filtration by the filter element 30; and a filtered concentration parameter 454 indicative of a filtered concentration of the brake dust particles in a filtered fluid flow exiting the filter element 30, e.g. fluid flow after filtration by the filter element 30. In various embodiments, the vehicle may include sensing devices, e.g. particle counters, installed in a part of the vehicle for measuring the unfiltered concentration of the brake dust particles in the unfiltered fluid flow, and the filtered concentration of the brake dust particles in the filtered fluid flow, and may transmit the unfiltered concentration parameter 452 and filtered concentration parameter 454 to the processor 410. Based on the unfiltered concentration parameter 452 and filtered concentration parameter 454, the processor 410 may determine the efficiency parameter 450. In various embodiments, the efficiency parameter 450 may comprise a ratio of the filtered concentration parameter 454 and the unfiltered concentration parameter 452.

As shown in FIG. 6, the processor 410 may be configured to compare the efficiency parameter 450 with a predetermined first efficiency threshold value 456 indicative of a first allowable filter efficiency of the brake dust particles. In various embodiments, the predetermined first efficiency threshold value 456 may comply with the legal rules and regulations associated with the brake dust particle filter device 10A, 10B. For example, the predetermined first efficiency threshold value 456 may include a range of values indicative of a first allowable amount of brake dust particles that may be released into the external environment by a vehicle.

Based on the comparison, the processor 410 may determine, if the efficiency parameter 450 is less than or equal to the predetermined first efficiency threshold value 456; and may trigger a notification, e.g. second notification 458 which may be displayed on a user interface of the processor 410, if it is determined that the efficiency parameter 450 is less than or equal to the predetermined first efficiency threshold value 456.

The second notification 458 may be indicative of a notice, e.g. second notice, informing a user of the first allowable filter efficiency of the brake dust particles to comply with the legal rules and regulations, and may further include information as to whether the filter efficiency of the brake dust particles by the filter element 30 complies with the required threshold of the predetermined first efficiency threshold value 456. The second notification 458 may be displayed on the dashboard of the vehicle. In various embodiments, the processor 410 may further provide data on an estimated time at which the processor 410 may adjust at least one of the one or more vehicle operating parameters 470 of the vehicle. Examples of the various notification types, for example, with reference to the third and fourth notification, have been described above, and repeated descriptions will be omitted for conciseness.

Referring to FIG. 6, the processor 410 may be configured to compare, the efficiency parameter 450, with a predetermined second efficiency threshold value 460 indicative of a second allowable filter efficiency of the brake dust particles. The predetermined second efficiency threshold value 460 may be less than the predetermined first efficiency threshold value 456. The predetermined second efficiency threshold value 460 may be representative of a minimum allowable filter efficiency of brake dust particles, for the brake dust particle filter device 10A, 10B to comply with the legal rules and regulation.

The processor 410 may further determine, if the efficiency parameter 450 is less than or equal to the predetermined second efficiency threshold value 460. If it is determined that the efficiency parameter 450 is less than or equal to the predetermined second efficiency threshold value 460, the processor 410 may trigger a notification, e.g. fifth notification, to the user, to inform the user that the filter efficiency of the brake dust particle filter device 10A, 10B in use in the vehicle no longer complies with the legal rules and regulations.

The processor 410 may also adjust, at least one of the one or more vehicle operating parameters 470 based on said determination. In various embodiments, the processor 410 may be configured to adjust the one or more vehicle operating parameters 470, e.g. engine operating parameter, acceleration operation parameter, thermostat operating parameter, so as to affect the operating performance of the vehicle and/or affect a user experience when using the vehicle, if it is determined that the efficiency parameter 450 is less than or equal to the predetermined second efficiency threshold value 460. Examples of the various adjustments of the operating parameters 470 have been described above, and repeated descriptions will be omitted for conciseness.

As shown in FIG. 6, the filter-related data 412 may further include a flow velocity parameter 480 indicative of a flow velocity difference between the unfiltered fluid flow entering the filter element 30, and the filtered fluid flow exiting the filter element 30. The processor 410 may be configured to obtain an unfiltered flow velocity parameter 482 indicative of a flow velocity of the unfiltered fluid flow entering the filter element 30, e.g. fluid flow before filtration by the filter element 30; and a filtered flow velocity parameter 484 indicative of a flow velocity of the filtered fluid flow exiting the filter element, e.g. fluid flow after filtration by the filter element 30. In various embodiments, a blower device (not shown) may be positioned before the brake dust particle filter 10A, 10B to generate the unfiltered fluid flow and the filtered fluid flow.

The unfiltered flow velocity parameter 482 and filtered flow velocity parameter 484 may be directly or indirectly obtained using one of more sensing devices of the vehicle. In various embodiments, the unfiltered flow velocity parameter 482 and the filtered flow velocity parameter 484 may be indirectly obtained by from pressure measurements, for example, using devices configured to measure the pressure of a fluid, of the unfiltered fluid flow and the filtered fluid flow. In some embodiments, in addition to the pressure of the unfiltered fluid flow and filtered fluid flow, the unfiltered flow velocity parameter 482 and the filtered flow velocity parameter 484 may be indirectly obtained based on a rotational speed and/or power consumption of the blower device. In some other embodiments, the unfiltered flow velocity parameter 482 may be directly measured using an air flow meter positioned before the filter element 30 to obtain the unfiltered flow velocity parameter 482, and the filtered flow velocity parameter 484 may be directly measured using another air flow meter positioned after the filter element 30.

The flow velocity parameter 480 may therefore be obtained based on the unfiltered flow velocity parameter 482 and the filtered flow velocity parameter 484. In various embodiments, the flow velocity parameter 480 may be a difference between the unfiltered flow velocity parameter 482 and the filtered flow velocity parameter 484.

Referring to FIG. 6, the processor 410 may be further configured to compare, the flow velocity parameter 480, with a predetermined flow velocity threshold value 486 indicative of an allowable flow velocity related to the filter element 30. The predetermined flow velocity threshold value 486 may be representative of a minimum allowable difference between the flow velocity of unfiltered fluid flow and filtered fluid flow, for the brake dust particle filter device 10A, 10B to comply with the legal rules and regulation.

The processor 410 may further determine, if the flow velocity parameter 480 is greater than or equal to the predetermined flow velocity threshold value 486. The flow velocity parameter 480 may represent a filter efficiency of the filter element 30, and a flow velocity parameter 480 which is greater than or equal to the predetermined flow velocity threshold value 486, may represent a reduction in the filter efficiency of the filter element 30. For example, the filter media 34 may be damaged or clogged leading to a larger value of the flow velocity parameter 480. In various embodiments, the processor 410 may trigger a notification, e.g. sixth notification 488, to the user, to inform the user of data on a remaining travel distance, and/or hours of operation of the engine of the vehicle, before the one or more vehicle operating parameters 470 of the vehicle may be adjusted. The notification may also include information that the brake dust particle filter device 10A, 10B in use in the vehicle no longer complies with the legal rules and regulations, and may need to be cleaned, repaired and/or replaced.

The processor 410 may also adjust, at least one of the one or more vehicle operating parameters 470 based on said determination. In various embodiments, the processor 410 may be configured to adjust the one or more vehicle operating parameters 470, e.g. engine operating parameter, acceleration operation parameter, thermostat operating parameter, so as to affect the operating performance of the vehicle and/or affect a user experience when using the vehicle, if it is determined that the flow velocity parameter 480 is greater than or equal to the predetermined flow velocity threshold value 486. Examples of the various adjustments of the operating parameters 470 have been described above, and repeated descriptions will be omitted for conciseness.

Referring to FIG. 6, the filter-related data 412 may further include a differential pressure parameter 490 indicative of a pressure difference between the unfiltered fluid flow entering the filter element 30, and the filtered fluid flow exiting the filter element 30. The processor 410 may be configured to obtain an unfiltered pressure parameter 492 indicative of a pressure of the unfiltered fluid flow entering the filter element 30, e.g. fluid flow before filtration by the filter element 30; and a filtered pressure parameter 494 indicative of a flow velocity of the filtered fluid flow exiting the filter element, e.g. fluid flow after filtration by the filter element 30.

The unfiltered pressure parameter 492 and filtered pressure parameter 494 may be obtained using one of more sensing devices of the vehicle. In various embodiments, the unfiltered pressure parameter 492 may be measured and obtained using a pressure sensor arranged before the filter element 30 and configured to measure a pressure of the unfiltered fluid flow; and the filtered pressure parameter 494 may be measured and obtained using another pressure sensor arranged after the filter element 30 and configured to measure a pressure of the filtered fluid flow.

The differential pressure parameter 490 may be obtained based on the unfiltered pressure parameter 492 and the filtered pressure parameter 494. In various embodiments, the differential pressure parameter 490 may be a difference between the unfiltered pressure parameter 492 and the filtered pressure parameter 494.

Referring to FIG. 6, the processor 410 may be further configured to compare, the differential pressure parameter 490, with a predetermined differential pressure threshold value 496 indicative of an allowable differential pressure related to the filter element 30. The predetermined differential pressure threshold value 496 may be representative of a minimum allowable pressure difference between the unfiltered fluid flow and filtered fluid flow, for the brake dust particle filter device 10A, 10B to comply with the legal rules and regulation.

The processor 410 may further determine, if the differential pressure parameter 490 is greater than or equal to the predetermined differential pressure threshold value 496. The differential pressure parameter 490 may be representative of a filter efficiency of the filter element 30, and a differential pressure parameter 490 which is greater than or equal to the predetermined differential pressure threshold value 496, may represent a reduction in the filter efficiency of the filter element 30. For example, the filter media 34 may be damaged or clogged leading to a larger pressure drop, e.g. larger differential pressure parameter 490, between the pressure of the unfiltered fluid flow and the fluid filtered flow. In various embodiments, the processor 410 may trigger a notification, e.g. seventh notification 498, to the user, to inform the user that the brake dust particle filter device 10A, 10B to inform the user of data on a remaining travel distance, and/or hours of operation of the engine of the vehicle, before the one or more vehicle operating parameters 470 of the vehicle may be adjusted. The notification may also include information that the brake dust particle filter device 10A, 10B in use in the vehicle no longer complies with the legal rules and regulations, and may need to be cleaned, repaired and/or replaced.

The processor 410 may also adjust, at least one of the one or more vehicle operating parameters 470 based on said determination. In various embodiments, the processor 410 may be configured to adjust the one or more vehicle operating parameters 470, e.g. engine operating parameter, acceleration operation parameter, thermostat operating parameter, so as to affect the operating performance of the vehicle and/or affect a user experience when using the vehicle, if it is determined that the differential parameter 490 is greater than or equal to the predetermined differential pressure threshold value 496. Examples of the various adjustments of the operating parameters 470 have been described above, and repeated descriptions will be omitted for conciseness.

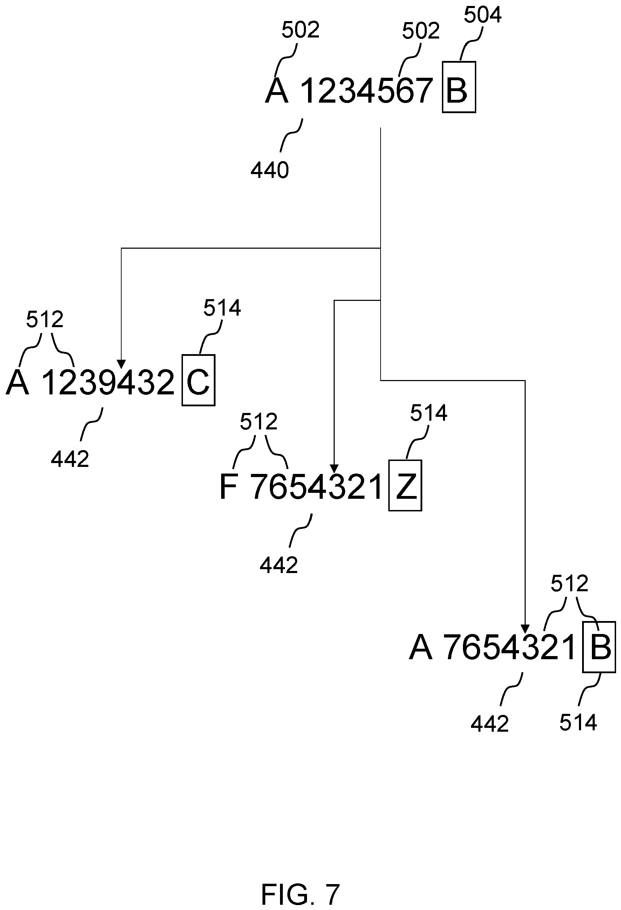

FIG. 7 shows an exemplary schematic illustration showing the comparison, between the identification values 502 of the authentication parameter 440 of the filter element 30, and the stored identification values 512 of a plurality of stored identification parameters 442. The example shown in FIG. 7 may be particularly applicable for determining, an authentication result 444 indicative of an authenticity of the filter element 30, as shown in control system 400A of FIG. 5.

The control system 400A may further include a storage device 406 configured to store a plurality of stored identification parameters 442, each stored identification parameter 442 indicative of a stored identity of a respective one of a plurality of references of the filter element 30.

As shown in FIG. 7, the authentication parameter 440 may include one or more identification values 502. The identification values 502 may comprise a series of alphanumeric digits unique to the filter element 30. In various embodiments, the authentication parameter 440 may refer to a serial number identification of a specific model of the filter element 30, and serves as a distinctive identifier of the filter element 30.

Each of the stored identification parameters 442 may also comprise one or more stored identification values 512 corresponding to a respective one of a plurality of references of the filter element 30. In the context of the disclosure, the plurality of references of the filter element 30, may refer to other filter elements of the specific model of the filter element 30 of the disclosure. That is, the one or more stored identification values 512 may refer to the unique serial number identification of the other filter elements of the specific model of the filter element 30 of the disclosure.

Referring to FIGS. 5 and 7, the processor 410 may be configured to, compare, the one or more identification values 502 of the authentication parameter 440, with a corresponding one of the one or more stored identification values 512, of each stored identification parameter 442. In other words, the processor 410 may compare the authentication parameter 440 to each stored identification parameter 442, e.g. a first, a second, a third etc. stored identification parameter 442, among the plurality of stored identification parameters 442. For example, the processor 410 may compare an identification value 502 at a ninth position 504 of the authentication parameter 440, with a corresponding stored identification value 512 at a same ninth position 514 of each of the stored identification values 442. While examples of three stored identification parameters 442 are illustrated in FIG. 5, the embodiments of the disclosure are not limited thereto, and the plurality of stored identification parameters 442 may include two or more stored identification parameters 442.

Based on the comparison, the processor 410 may determine, if the one or more identification values 502 of the authentication parameter 440, matches, e.g. is equal to, the corresponding one of the one or more stored identification values 512, of at least one stored identification parameter 442 of the plurality of stored identification parameters 442. In the example shown in FIG. 7, the processor 410 may determine, if the identification value 502 at the ninth position 504, e.g. "B" of the authentication parameter 440, with the corresponding stored identification value 512 the ninth position 514, e.g. "C"; "Z"; "B", of each of the stored identification values 442. The processor 410 may further determine, if the identification value 502 at a specific position of the authentication parameter 440, matches the corresponding one of the one or more stored identification values 512 at said corresponding specific position.

The processor 410 may then, determine, the authentication result 444 indicative of the authenticity or originality of the filter element 30, based whether the one or more identification values 502 of the authentication parameter 440, matches the corresponding one of the one or more stored identification values 512, of at least one stored identification parameter 442. In various embodiments, the authentication result 444 may be based on whether each identification value 502 of the authentication parameter 440, matches the corresponding one of the one or more stored identification values 512, of at least one stored identification parameter 442. In the example shown in FIG. 7, it may be seen that none of stored identification parameters 442 correspond to the authentication parameter 440, of the filter element 30 of the disclosure.

The processor 410 may be further configured to trigger, a notification, e.g. first notification 446 indicative of a first notice indicative of the authenticity of the filter element 30, based on the authentication result 444. The first notification 446 may be displayed on a user interface of the processor 410, or a user interface, e.g. dashboard, of the vehicle, to provide a user information on whether the filter element 30 for use with the vehicle, is an authentic and original filter element 30 produced by a specific manufacturer, and in particular, has been tested to comply with the legal rules and regulations associated with the brake dust particle filter device 10A, 10B. Accordingly, the user may be aware of whether the brake dust particle filter device 10 for use with the vehicle is an authentic element, and/or whether the device 10A, 10B has been tampered with, or replaced with an inauthentic element that does not comply with the legal rules and regulations. Examples of the various notification types, for example, with reference to the second notification 458, the third to fifth notifications, the sixth notification 488 and the seventh notification 498, have been described above, and repeated descriptions will be omitted for conciseness.

In various embodiments, in addition to data on a remaining travel distance, and/or hours of operation of the engine of the vehicle before the one or more vehicle operating parameters 470 of the vehicle may be adjusted, as described above, the first notification 446 may further include information on the filtered concentration parameter 454 indicative of the filtered concentration of the brake dust particles in the filtered fluid flow exiting the filter element, and whether the filtered concentration parameter 454 is less than or equal to a predetermined brake dust particle emission limit indicative of a maximum brake dust particle emissions that may be released into the environment. For example, the processor 410 may compare the filtered concentration parameter 454 with the predetermined brake dust particle emission limit. In some embodiments, when it is determined that the filter element 30 is an inauthentic element, the first notification 446 may be provided to allow the user to time to replace the inauthentic element provided that the brake dust particle emissions of the inauthentic filter element, e.g. filtered concentration parameter 454, are within the predetermined brake dust particle emission limit.

In various embodiments, the processor 410 may be configured to adjust, at least one of the one or more vehicle operating parameters 470, based on the authentication result 444, in particular, if it is determined that at least one of the one or more identification values 502 of the authentication parameter 440, does not match the corresponding one of the one or more stored identification values 512, of at least one stored identification parameter 442. That is, the filter element 30 in use in the vehicle is not an authentic filter element which has been tested to comply with the legal rules and regulations, and therefore should not be used for filtering brake dust particles. In some embodiments, the processor 410 may adjust the engine operating parameter to cause the vehicle operation device 408 to deactivate the engine of the vehicle.

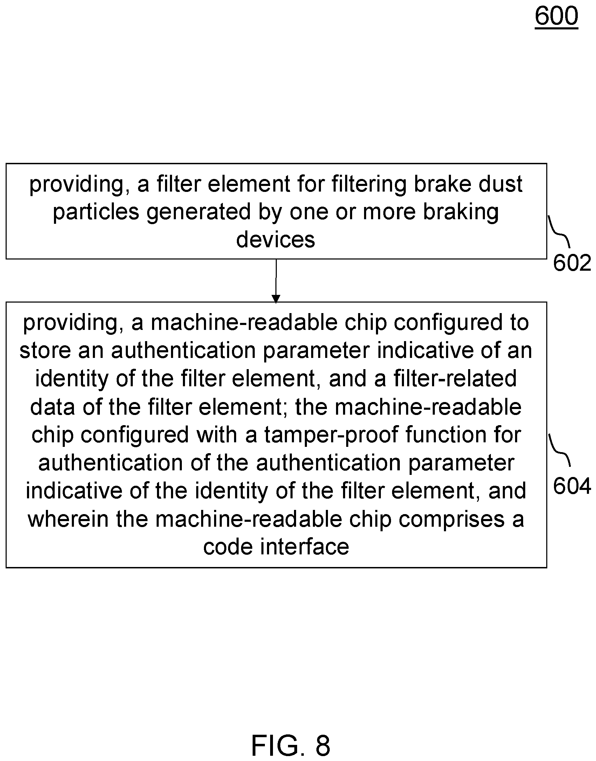

FIG. 8 shows an exemplary flowchart of a method 600 for providing a brake dust particle filter device for a vehicle, in accordance with another aspect of the disclosure. The brake dust particle filter device may refer to the device 10A, 10B described with reference to FIGS. 1 to 4 of the disclosure, and repeated descriptions will be omitted for brevity.

Method 600 comprises: providing, a filter element for filtering brake dust particles generated by one or more braking devices (step 602); and providing, a machine-readable chip configured to store an authentication parameter indicative of an identity of the filter element, and a filter-related data of the filter element; the machine-readable chip configured with a tamper-proof function for authentication of the authentication parameter indicative of the identity of the filter element, and wherein the machine-readable chip comprises a code interface (step 604). In other words, the machine-readable chip may store data related to the brake dust particle filter device, of which comprises, the authentication parameter and the filter-related data.

In various embodiments, the filter element is a cleanable filter element, and the filter element further comprises a stripper device for cleaning the cleanable filter element. The filter-related data comprises a cleaning parameter of a stripper device, the cleaning parameter indicative of a cleaning state of the stripper device, and wherein the machine-readable chip is configured to obtain the cleaning parameter from the stripper device.

In various embodiments, the machine-readable chip is configured to communicate with a code scanner based on a RF communication protocol, or the machine-readable chip is configured to generate a QR code or a bar code.

The improved brake dust particle filter device 10A, 10B comprising the machine-readable chip 14 configured to store filter-related data 412 and/or the authentication parameter 440, and further configured with a tamper-proof function for authentication of said authentication parameter 440, may therefore allow a user to ascertain if the device for use in the vehicle, is an original device produced by a specific manufacturer. In particular, the user may be aware if the device 10A, 10B in use has been tested to comply with the legal rules and regulations. This prevents the use of ineffective and untested brake dust particle filter devices, that fail to comply with the legal rules and regulations. Further, the improved device 10A, 10B of the disclosure also allows the user to receive information regarding the filter-related data 412, and may therefore be aware of when the filter element 30 of the device 10A, 10B may need to be cleaned, repaired and/or replaced.

While the disclosure has been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

## Claims

1. A brake dust particle filter device (10A, 10B) for a vehicle, the device (10A, 10B) comprising
a filter element (30) for filtering brake dust particles generated by one or more braking devices;
a machine-readable chip (14) configured to store an authentication parameter (440) indicative of an identity of the filter element (30), and a filter-related data (412) of the filter element (30), the machine-readable chip (14) comprising a code interface (16), the code interface (16) accessible by a code scanner (402) to retrieve at least one of the authentication parameter (440) and/or the filter-related data (412) of the filter element (30);
wherein the machine-readable chip (14) is configured with a tamper-proof function for authentication of the authentication parameter (440); optionally
wherein the machine-readable chip (14) is configured to communicate with the code scanner (402) based on a radio frequency (RF) communication protocol, or wherein the machine-readable chip (14) is configured to generate a quick response (QR) code or a bar code.

2. The brake dust particle filter device (10A, 10B) of claim 1, wherein the filter element (30) is a cleanable filter element (30),
wherein the filter element (30) further comprises a stripper device (20) for cleaning the cleanable filter element (30),
wherein the filter-related data (412) comprises a cleaning parameter (430) of the stripper device (20), the cleaning parameter (430) indicative of a cleaning state of the stripper device (20), and
wherein the machine-readable chip (14) is configured to obtain the cleaning parameter (430) from the stripper device (20).

3. A brake dust particle filter control system (400A, 400B) for a vehicle, the control system (400A, 400B) comprising the brake dust particle filter device (10A, 10B) according to any one of claims 1 to 2, wherein the control system (400A, 400B) further comprises, the code scanner (402) in data communication with a processor (410), the code scanner (402) configured to access the code interface (16) to retrieve at least one of the authentication parameter (440) and/or the filter-related data (412) of the filter element (30).

4. The control system (400A, 400B) of claim 3, wherein the filter-related data (412) of the filter element (30) comprises a construct parameter (420) indicative of a model status of the filter element (30), the model status of the filter element (30) comprising at least one of a filter media parameter (422) indicative of a type of filter media (34) of the filter element (30); and/or a service lifetime parameter (426) indicative of a remaining usable life of the type of the filter media (34) of the filter element (30); optionally
wherein the filter-related data (412) of the filter element (30) comprises a cleaning parameter (430) indicative of a cleaning state of the stripper device (20), the cleaning parameter (430) comprising, a stripper device counting parameter (432) indicative of a number of times the stripper device (20) has been used for cleaning the filter element (30); and a predetermined stripper device usable lifetime threshold value (434) indicative of a usable lifetime of the stripper device (20); wherein the processor (410) is configured to determine, a stripper device remaining lifetime parameter (436) indicative of a remaining usable life of the stripper device (20), based on the stripper device counting parameter (432) and the predetermined stripper device usable lifetime threshold value (434); optionally
wherein the authentication parameter (440) indicative of the identity of the filter element (30) comprises one or more identification values (502); wherein the control system (400A, 400B) further comprises, a storage device (406) configured to store a plurality of stored identification parameters (442), each stored identification parameter (442) indicative of a stored identity of a respective one of a plurality of references of the filter element (30), wherein each of the stored identification parameter (442) comprises one or more stored identification values (512); wherein the processor (410) is further configured to compare, the one or more identification values (502) of the authentication parameter (440), with a corresponding one of the one or more stored identification values (512), of each stored identification parameter (442); determine, if the one or more identification values (502) of the authentication parameter (440), matches the corresponding one or more stored identification values (512), of at least one stored identification parameter (442) of the plurality of stored identification parameters (442); and determine, an authentication result (444) indicative of an authenticity of the filter element (30), based on the determination whether the one or more identification values of the authentication parameter (440), matches the corresponding one of the one or more stored identification values (512), of at least one stored identification parameter (442) of the plurality of stored identification parameters (442).

5. The control system (400A, 400B) of claim 4, wherein the type of the filter media (34) comprises a pleated filter media (34), and wherein the model status of the filter element (30) comprises, a pleat filter media parameter (424) indicative of a pleat number data and/or a pleat height data, of the pleated filter media (34); optionally
wherein the control system (400A, 400B) further comprises a filter control unit (414) operable to control an operation of the stripper device (20) of the brake dust particle filter device (10A, 10B), the filter control unit (414) in data communication with the processor (410), wherein the filter control unit (414) comprises one or more counters configured to measure the number of times the stripper device (20) has been used to clean the filter element (30); and determine the stripper device counting parameter (432); optionally
wherein the processor (410) is further configured to trigger, a first notification (446) indicative of a first notice to a user, the first notice indicative of the authenticity of the filter element (30), based on the authentication result (444).

6. The control system (400A, 400B) of any one of claims 3 to 5, wherein the filter-related data (412) of the filter element (30) comprises an efficiency parameter (450) indicative of a filter efficiency of the brake dust particles by the filter element (30),
wherein the processor (410) is further configured to
obtain, an unfiltered concentration parameter (452) indicative of an unfiltered concentration of the brake dust particles in an unfiltered fluid flow entering the filter element (30), and a filtered concentration parameter (454) indicative of a filtered concentration of the brake dust particles in a filtered fluid flow exiting the filter element (30); and
determine, the efficiency parameter (450) based on the unfiltered concentration parameter (452) and the filtered concentration parameter (454); optionally
wherein the filter-related data (412) of the filter element (30) comprises a flow velocity parameter (480) indicative of a flow velocity difference between the unfiltered fluid flow entering the filter element (30), and the filtered fluid flow exiting the filter element (30), wherein the processor (410) is further configured to obtain, an unfiltered flow velocity parameter (482) indicative of a flow velocity of the unfiltered fluid flow entering the filter element (30), and a filtered flow velocity parameter (484) indicative of a flow velocity of the filtered fluid flow exiting the filter element (30); and determine, the flow velocity parameter (480) based on the unfiltered pressure parameter and the filtered pressure parameter; optionally
wherein the filter-related data (412) of the filter element (30) comprises a differential pressure parameter (490) indicative of a pressure difference between the unfiltered fluid flow entering the filter element (30), and the filtered fluid flow exiting the filter element (30), wherein the processor (410) is further configured to obtain, an unfiltered pressure parameter (492) indicative of a pressure of the unfiltered fluid flow entering the filter element (30), and a filtered pressure parameter (494) indicative of a pressure of the filtered fluid flow exiting the filter element (30); and determine, the differential pressure parameter (490) based on the unfiltered pressure parameter (492) and the filtered pressure parameter (494).

7. The control system (400A, 400B) of claim 6, wherein the processor (410) is further configured to
compare, the efficiency parameter (450), with a predetermined first efficiency threshold value (456) indicative of a first allowable filter efficiency of the brake dust particles;
determine, if the efficiency parameter (450), is less than or equal to the predetermined first efficiency threshold value (456); and trigger, a second notification (458) indicative of a second notice to the user, the second notice indicative of whether the efficiency parameter (450), is less than or equal to the predetermined first efficiency threshold value (456).

8. The control system (400A, 400B) of any one of claims 3 to 7, wherein the control system (400A, 400B) further comprises
a vehicle operation device (408) for controlling one or more vehicle operating parameters (470), each vehicle operating parameter (470) indicative of an operating status of the vehicle.

9. The control system (400A, 400B) of claim 8 when combined with claim 4, wherein the processor (410) is further configured to
compare, the service lifetime parameter (426), with a predetermined filter element usable lifetime threshold value (428) indicative of a usable life of the type of filter media (34) of the filter element (30);
determine, if the service lifetime parameter (426), is less than or equal to the predetermined filter element usable lifetime threshold value (428); and
adjust, at least one of the one or more vehicle operating parameters (470), based on the determination whether the service lifetime parameter (426), is less than or equal to the predetermined filter element usable lifetime threshold value (428).

10. The control system (400A, 400B) of claim 8 when combined with any one of claims 4 or 5, wherein the processor (410) is further configured to
compare, the stripper device remaining lifetime parameter (436), with the predetermined stripper device usable lifetime threshold value (434);
determine, if the stripper device remaining lifetime parameter (436), is less than or equal to the predetermined stripper device usable lifetime threshold value (434); and
adjust, at least one of the one or more vehicle operating parameters (470), based on the determination whether the stripper device remaining lifetime parameter (436), is less than or equal to the predetermined stripper device usable lifetime threshold value (434).

11. The control system (400A, 400B) of claim 8 when combined with any one of claims 4 or 5, wherein the processor (410) is further configured to
adjust, at least one of the one or more vehicle operating parameters (470), based on the authentication result (444) indicative of the authenticity of the filter element (12).

12. The control system (400A, 400B) of claim 8 when combined with any one of claims 6 or 7, wherein the processor (410) is further configured to
compare, the efficiency parameter (450), with a predetermined second efficiency threshold value (460) indicative of a second allowable filter efficiency of the brake dust particles, wherein the predetermined second efficiency threshold value (460) is less than the predetermined first efficiency threshold value (456);
determine, if the efficiency parameter (450), is less than or equal to the predetermined second efficiency threshold value (460); and
adjust, at least one of the one or more vehicle operating parameters (470), based on the determination whether the efficiency parameter (450), is less than or equal to the predetermined second efficiency threshold value (460).

13. The control system (400A, 400B) of claim 8 when combined with claim 6, wherein the processor (410) is further configured to,
compare, the flow velocity parameter (480), with a predetermined flow velocity threshold value (486) indicative of an allowable flow velocity related to the filter element (30);
determine, if the flow velocity parameter (480), is greater than or equal to the predetermined flow velocity threshold value (486); and
adjust, at least one of the one or more vehicle operating parameters (470), based on the determination whether the flow velocity parameter (480), is greater than or equal to the predetermined flow velocity threshold value (486); optionally
wherein the processor (410) is further configured to,
compare, the differential pressure parameter (490), with a predetermined differential pressure threshold value (496) indicative of an allowable differential pressure related the filter element (30);
determine, if the differential pressure parameter (490), is greater than or equal to the predetermined differential pressure threshold value (496); and
adjust, at least one of the one or more vehicle operating parameters (470), based on the determination whether the differential pressure parameter (490), is greater than or equal to the predetermined differential pressure threshold value (496).

14. A method (600) for providing a brake dust particle filter device for a vehicle, the method comprising
providing, a filter element for filtering brake dust particles generated by one or more braking devices (602); and
providing, a machine-readable chip configured to store an authentication parameter indicative of an identity of the filter element, and a filter-related data of the filter element; the machine-readable chip configured with a tamper-proof function for authentication of the authentication parameter indicative of the identity of the filter element, and wherein the machine-readable chip comprises a code interface (604).

15. The method (600) of claim 14, wherein the filter element is a cleanable filter element,
wherein the filter element further comprises a stripper device for cleaning the cleanable filter element;
wherein the filter-related data comprises a cleaning parameter of a stripper device, the cleaning parameter indicative of a cleaning state of the stripper device, and
wherein the machine-readable chip is configured to obtain the cleaning parameter from the stripper device; optionally
wherein the machine-readable chip is configured to communicate with a code scanner based on a RF communication protocol, or wherein the machine-readable chip is configured to generate a QR code or a bar code.
